# EUROPÄISCHE PATENTSCHRIFT

(11) **EP 0 312 974 B1**
(45) Veröffentlichungstag und Bekanntmachung des Hinweises auf die Patenterteilung: **30.03.1994**
(21) Anmeldenummer: 88117289.4
(22) Anmeldetag: 18.10.1988
(51) Int. Cl.: B65H 45/30

(54) **Verfahren zum Verbinden von mindestens zwei Materialbahnen**
Method for joining two material webs
Procédé de jonction de deux bandes de matériau

(30) Priorität: 23.10.1987 DE 3735856; 26.11.1987 DE 3740045
(43) Veröffentlichungstag der Anmeldung: 26.04.1989
(60) Teilanmeldung: 91106388.1
(73) Patentinhaber: GRAFOTEC GMBH, D-86420 Diedorf (DE)
(72) Erfinder: McPherson, Malcolm, Poole Dorset BH16 5RA (GB); SENFT, Reinhold, 8901 Diedorf (DE)
(74) Vertreter: Munk, Ludwig, Dipl.-Ing.

(56) Entgegenhaltungen:
- DE-A- 3 215 372
- GB-A- 2 165 470
- US-A- 2 198 460
- US-A- 2 747 865
- J. SHIELDS: "ADHESIVES HANDBOOK" 1970, BUTTERWORTH, LONDON
- I. SKEIST: "HANDBOOK OF ADHESIVES" 1977, VAN NOSTRAND REINHOLD CO., NEW YORK , KAPITEL 32 "ACRYLIC ADHESIVES AND SEALANTS"

## Beschreibung

Die Erfindung betrifft ein Verfahren zum Verbinden von mindestens zwei Materialbahnen mittels wenigstens eines auf wenigstens eine der Bahnen aufzutragenden, durchgehenden oder unterbrochenen Streifens aus dünnflüssigem Leim, der mittels einer Düse auf die jeweils zugeordnete Materialbahn berührungslos aufgespritzt und vorher gefiltert wird.

Ein Verfahren dieser Art ist aus der US-A-2 747 865 bekannt. Hierbei findet ein wasserlöslicher, auf der Basis von Dextrin hergestellter Leim Verwendung. Der Bohrungsdurchmesser der Düse, mit welcher der Leim auf die zugeordnete Materialbahn aufgespritzt wird, beträgt 20 bis 30µ (8 bis 12‰ inch). Um hier eine zuverlässige Arbeitsweise zu gewährleisten, ist ein vergleichsweise hoher Druck von 255bar (45 pounds per square inch) erforderlich. Die Folge davon ist, daß zur Aufnahme des Leims drucksichere Spezialbehälter benötigt werden, was sowohl vom Bereitstellungsaufwand als auch von der Handhabung sehr unerwünscht ist. Außerdem besteht beim Umfüllen des Leims von den handelsüblichen Gebinden in einen Spezialbehälter auch eine nicht unerhebliche Verschmutzungsgefahr, was die Gefahr von Störungen erhöht.

Hiervon ausgehend ist es daher die Aufgabe der vorliegenden Erfindung, ein Verfahren eingangs erwähnter Art so zu verbessern, daß auf einfache und kostengünstige Weise eine hohe Zuverlässigkeit und Störungsfreiheit erreicht werden.

Diese Aufgabe wird erfindungsgemäß dadurch gelöst, daß der verwendete Leim eine wasserähnliche Viskosität besitzt, die mit der Viskosität von Wasser ein Verhältnis von höchstens 1,5 bis 2 ergibt, daß bei der Filterung des Leims ein Weitenverhältnis von Maschenweite zu Düsenweite von etwa 1:4 verwendet wird und daß der Leim mit Niederdruck von etwa 1,5bar beaufschlagt wird.

Mit diesen Maßnahmen werden die Nachteile des eingangs erwähnten Standes der Technik vollständig vermieden. Die wasserähnliche Konsistenz des Leims und das vorgeschlagene Weitenverhältnis von Maschenweite zu Düsenweite ermöglichen in vorteilhafter Weise den zur Anwendung kommenden Niederdruck, ohne daß sich dies ungünstig auf den erzielbaren Filterdurchsatz und die Strahlqualität auswirken kann. Gleichzeitig ist sichergestellt, daß hier keinerlei Spezialbehälter zur Aufnahme des Leims benötigt werden. Es entfallen daher nicht nur der hierfür erforderliche Bereitstellungsaufwand, sondern auch jeder Arbeitsaufwand zum Umfüllen des Leims von handelsüblichen Gebinden in Spezialbehälter sowie jede hiermit verbundene Verschmutzungsgefahr.

In Fortbildung der übergeordneten Maßnahmen kann beim Verbinden von wenigstens zwei mittels einer Druckmaschine bedruckten Papierbahnen beim Abschalten der Druckmaschine vor Erreichen des Stillstands der Papierbahnen die Leimauftragseinrichtung zumindest ab einer jeder Düse vorgeordneten Ventilanordnung mit Falzhilfeflüssigkeit, vorzugsweise in Form von erwärmtem Wasser, gespült werden, wobei die Leimzuleitung abgesteuert und eine Falzhilfeflüssigkeitszuleitung aufgesteuert werden. Mit einer derartigen Spülung kann in vorteilhafter Weise bereits begonnen werden, sobald die Bahngeschwindigkeit beim Abschalten der Maschine unter etwa ein Drittel der üblichen Bahngeschwindigkeit abgefallen ist, da während des letzten Auslaufs dere Bahn ohnehin Makulatur entsteht. Dennoch wird hierdurch gewährleistet, daß der infolge der Spülung sich ergebende Flüssigkeitsanfall durch die Bahn abtransportiert wird.

Weitere vorteilhafte Fortbildungen und zweckmäßige Ausgestaltungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:
- Figur 1: eine Draufsicht auf eine einem Falzapparat vorgeordnete Leimauftragseinrichtung,
- Figur 2: ein Blockschaltbild einer Leim- und Falzhilfeflüssigkeits-Auftragseinrichtung und
- Figur 3: einen Schnitt durch einen Auftragkopf der Anordnungen gemäß Figuren 1 und 2.

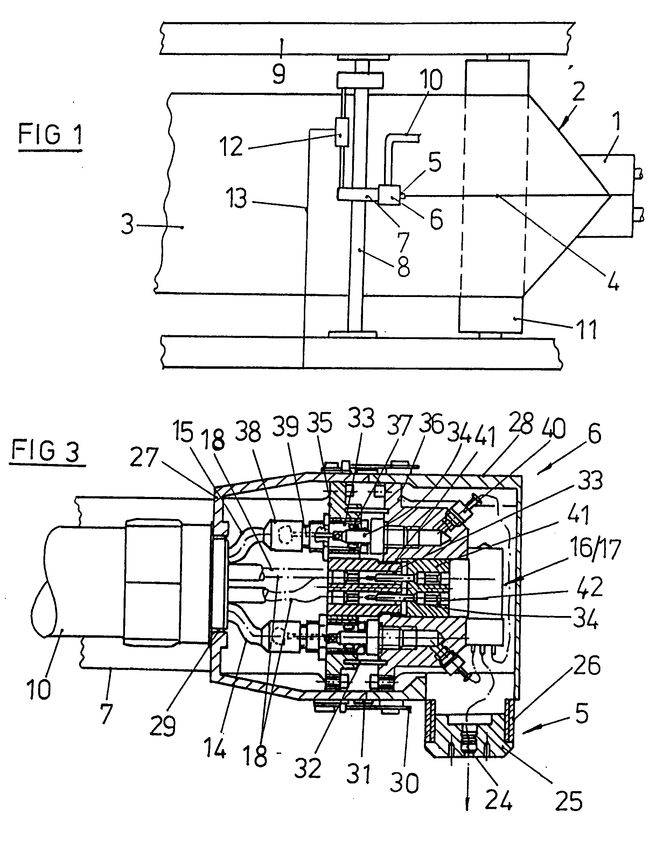

Die der Figur 1 zugrundeliegende Längsfalzeinrichtung besteht aus einem über zwei Falzwalzen 1 angeordneten Falztrichter 2, über den ein aus mehreren bedruckten Papierbahnen 3 bestehendes Bahnpaket gezogen wird. Die aufeinanderliegenden Papierbahnen werden miteinander verleimt, hier im Bereich der durch die Falzwalzen 1 und dem Falztrichter 2 erzeugbaren Falzlinie. Hierzu wird auf die unter der obersten Papierbahn liegenden Papierbahnen im Bereich jeder gewünschten Leimnaht jeweils ein Leimstrich 4 aufgetragen. Als Leim ist besonders gut geeignet ein niederviskoser, nicht ionogen emulgierte Polymerkleber auf Akrylatbasis. Hierbei handelst es sich um einen Dispersionsleim mit einem Alkohol- oder Wasseranteil von etwa 40% und einem Klebstoffanteil von etwa 60%. Ein derartiger Leim ist dünnflüssig, d.h. besitzt eine wasserähnliche Viskosität in der Größenordnung von 17sec bei Messung mit dem DIN 4mm-Becher. Die Viskosität von Wasser liegt bei etwa 10sec. Die Oberflächenspannung des Leims kann bei etwa 30 mN/m² liegen.

Der Leimstrich wird mittels einer Düse 5 berührungslos erzeugt. Die Düse 5 ist auf einem Auftragkopf 6 aufgenommen, der mittels eines zugeordneten Halters 7 an einer Traverse 8 festgelegt ist, die an den Gestellseitenwänden 9 des Falzapparateüberbaus bzw. der Druckmaschine befestigt ist. Der Auftragkopf 6 wird über einen angesetzten Versorgungsstrang 10 mit dem auf die zugeordnete Papierbahn aufzutragenden Medium sowie den erforderlichen Steuersignalen versorgt. Die Düse 5 befindet sich im Bereich des Auflaufs der zugeordneten Papierbahn 3 auf die oberhalb des Falztrichters 2 angeordnete Umlenkwalze 11, die eine straffe Bahnführung gewährleistet. Da die Düse 5 jedoch berührungslos arbeitet, kommt es auf einen konstanten Abstand der Bahn 3 von der zugeordneten Düse 5 nicht an, so daß der Auftragkopf 6 auch von der Umlenkwalze 11 weiter entfernt sein könnte, als es beim dargestellten Ausführungsbeispiel der Fall ist.

Die Stellung des Auftragkopfes 6 ist durch entsprechendes Verschieben des Halters 7 entlang der Traverse 8 einstellbar. In einfachen Fällen kann diese Einstellung manuell erfolgen. Im dargestellten Ausführungsbeispiel gemäß Figur 1 ist hierzu eine fernbedienbare Stelleinrichtung 12 vorgesehen, die über eine zum Bedienungspult führende Signalleitung 13 ansteuerbar ist. Die Anzahl der auf einer Traverse 8 aufgenommenen Auftragköpfe 6 entspricht der Anzahl der auf die betreffende Bahn 3 aufzutragenden Leimstriche 4. Im dargestellten Ausführungsbeispiel wird, wie weiter oben schon erwähnt, ein mittiger Leimstrich 4 aufgetragen und ist dementsprechend ein mittig angeordneter Auftragkopf 6 vorgesehen.

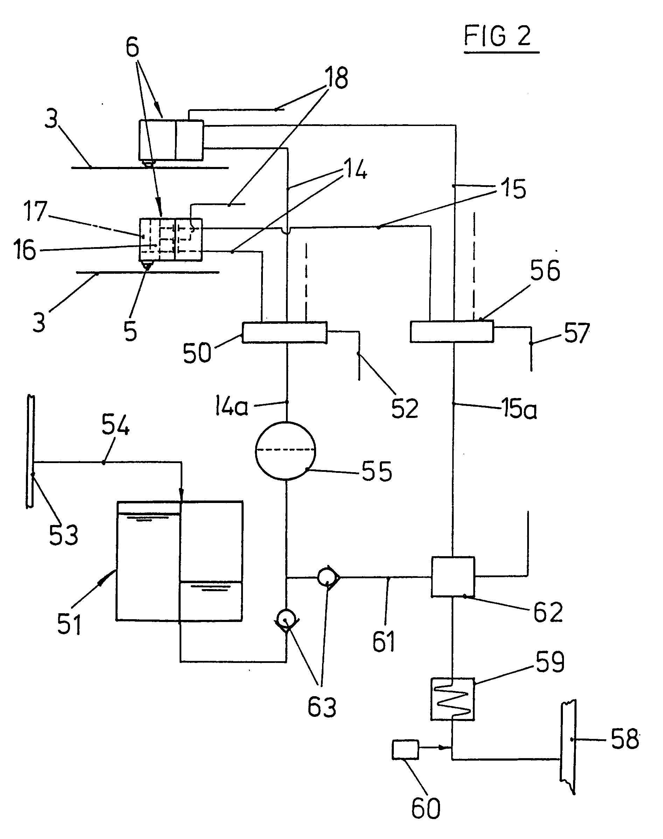

Auf die oberste Bahn eines Bahnpakets wird anstelle von Leim im Bereich der Falzlinie eine Falzhilfeflüssigkeit aufgetragen. Dasselbe gilt auch für die darunterliegenden Bahnen 3, sofern im Bereich der Falzlinie kein Leim aufgetragen werden soll. Da an einer Stelle jedoch nur entweder Leim oder Falzhilfeflüssigkeit benötigt werden, kann der Auftrag von Leim bzw. Falzhilfeflüssigkeit mit Hilfe ein- und desselben Auftragkopfes 6 erfolgen, der je nach Betriebsart mit Leim bzw. Falzhilfeflüssigkeit beaufschlagt wird. Ein derartiger Auftragkopf ist daher, wie am besten aus den Figuren 2 und 3 erkennbar ist, an zwei parallele, im Versorgungsstrang 10 enthaltene Flüssigkeitszuleitungen 14 , 15 für Leim bzw. Falzhilfeflüssigkeit angeschlossen und mit einer eingebauten, der Düse 5 vorgeordneten Ventilanordnung mit hier zwei in Serie liegenden Steuerventilen 16, 17 versehen, mit Hilfe derer die gewünschte Zuleitung aktiviert und die andere passiviert werden kann. Die Steuerventile 16, 17 werden durch in den Auftragkopf einlaufende, ebenfalls im Versorgungsstrang 10 enthaltene Signalzuleitungen 18 angesteuert.

Das der Düse 5 unmittelbar vorgeordnete Steuerventil 17 kann dabei als Unterbrecherventil ausgebildet sein, mit Hilfe dessen Unterbrechungen des Flüssigkeitsstrichs 4 erzeugbar sind. Das andere Steuerventil 16 ist als Mehrwege-Ventil ausgebildete, das einen Ausgang und zwei Eingänge aufweist, von denen der eine an der Leimzuleitung 14 und der andere an der Falzhilfeflüssigkeitszuleitung 15 liegen. Diese Anordnung ermöglicht nicht nur eine wahlweise Beaufschlagung der Düse 5 mit Leim bzw. Falzhilfeflüssigkeit sondern ermöglicht auch nach Beendigung eines Leimauftrags eine Spülung der Düse 5 mit Falzhilfeflüssigkeit, für die vorzugsweise erwärmtes Leitungswasser Verwendung finden kann.

Die zu den einzelnen Auftragköpfen 6 führenden Leimzuleitungen 14 gehen, wie Figur 2 weiter erkennen läßt, von einem Verteilerorgan 50 ab, das über eine Leimsammelzuleitung 14a mit einem Leimvorratsbehälter 51 verbunden ist. Das Verteilerorgan 50 ist über eine Steuerleitung 52 so ansteuerbar, daß jeweils nur die gewünschten Auftragköpfe 6 mit Leim versorgt werden. Der Leim kann aus dem Leimvorratsbehälter 51 abgepumpt werden. Im dargestellten Ausführungsbeispiel wird der Leim durch Druckbeaufschlagung des Leimvorratsbehälters 51 aus diesem abgedrückt. Hierzu wird die Leimoberfläche mit einer Druckluftquelle, hier in Form des betriebsinternen Druckluftnetzes 53, entnommener Druckluft beaufschlagt, die mittels einer Druckleitung 54 zugeführt wird. Der Leimvorratsbehälter 51 ist im dargestellten Ausführungsbeispiel so ausgebildet, daß jeweils zwei Leimgebinde aufnehmbar sind, die abwechselnd entleert werden. Der Anschluß der Druckleitung 54 ist hierzu entsprechend umschaltbar.

Infolge der Dünnflüssigkeit des Leims kann der Durchmesser der Düsenbohrung der Düse 5 im Bereich von lediglich 0,5 mm liegen. Bei einer derart kleinen Düsenöffnung reicht der überliche Netzdruck von etwa 1,5 bar vollständig aus, um den Leim zur Düse 5 zu transportieren und über die Düsenbohrung abzuspritzen. Der Leimdruck liegt hierbei im Niederdruckbereich, so daß eine schwache Dimensionierung der Leitungen und Behälter möglich ist.

Die Leimsammelzuleitung 14a führt über eine dem Leimvorratsbehälter 51 nachgeordnete Filtereinrichtung 55. Diese enthält ein Filter mit einer Maschenweite von etwa 125 u. Infolge der Dünnflüssigkeit des Leims ergibt sich im Bereich der Filtereinrichtung 55 auch bei kompakter Bauweise kein übermäßiger Druckabfall. Das Filter der Filtereinrichtung 55 kann aus rostfreiem Stahl bestehen. Das in der Größenordnung von 1 zu 4 liegende Weitenverhältnis von Filtermaschenweite zu Düsenbohrungsdurchmesser gewährleistet einen verstopfungsfreien Langzeitbetrieb.

Die Feuchthilfeflüssigkeitszuleitungen 15 gehen ebenfalls von einem Verteilerorgan 56 ab, das über eine Steuerleitung 57 ansteuerbar ist. Das Verteilerorgan 56 ist über eine Falzhilfeflüssigkeitssammelzuleitung 15a mit einer entsprechenden Flüssigkeitsquelle, hier in Form des Wasserleitungsnetzes 58 verbunden. Das als Falzhilfeflüssigkeit Verwendung findende Leitungswasser wird über die Raumtemperatur erwärmt. Hierzu ist in der Sammelzuleitung 15a ein Durchlauferhitzer 59 vorgesehen. In manchen Fällen werden dem Wasser noch zusätzliche Chemikalien beigemischt. Hierzu ist dem Durchlauferhitzer 59 eine Beimischeinrichtung 60 vorgeordnet.

Die Falzhilfeflüssigkeit kann nicht nur zur Spülung der Düsen 5, sondern auch zur Spülung des gesamten Leimauftragsystems Verwendung finden. Hierzu sind die Leimsammelzuleitung 14a und die Falzhilfeflüssigkeitszuleitung 15a durch eine Bypass-Leitung 61 miteinander verbunden, die stromabwärts vom Durchlauferhitzer 59 von der Falzhilfeflüssigkeitssammelzuleitung 15a abzweigt und im Bereich des Ausgangs des Leimvorratsbehälters 51 in die Leimsammelzuleitung 14a einmündet. An der Abzweigung der Bypass-Leitung 61 von der Falzhilfeflüssigkeitssammelzuleitung 15a ist ein fernsteuerbares Mehrwegeventil 62 vorgesehen, das eine alternative Wasserführung über das Falzhilfeflüssigkeitssystem bzw.das Leimsystem ermöglicht. Zur Vermeidung eines unerwünschten Eindringens von Wasser in den Leimvorratsbehälter 51 bzw. von Leim in das Falzhilfeflüssigkeitssystem sind der Einmündung der Bypass-Leitung 61 in die Leimsammelzuleitung 14a beidseitig vorgeordnete Rückschlagventile 63 vorgesehen. Durch Spülung des gesamten Leimauftragssystems mit erwärmten Wasser lassen sich Verkrustungen etc., die sich im Laufe längerer Stillstandszeiten bilden könnten, zuverlässig vermeiden.

Im Falle kürzerer Stillstandszeiten genügt in der Regel zur Vermeidung von Betriebsstörungen bereits eine Spülung der Auftragköpfe 6. Hierzu wird bei passivierter Bypass-Leitung 61 die in jeden Auftragkopf 6 eingebaute Ventilanordnung so angesteuert, daß beim Abschalten des Bahnvorschubs im Bereich sämtlicher Auftragköpfe 6 die Leimzuleitung unterbrochen und die Falzhilfeflüssigkeitszuleitung geöffnet ist. Mit den genannten Spülungen der Auftragköpfe 6 bzw. des gesamten Leimauftragssystems kann begonnen werden, sobald die Bahngeschwindigkeit unter etwa ein Drittel der üblichen Bahngeschwindigkeit abgefallen ist, da bei Beendigung des Drucks ohnehin Makulatur entsteht. Die Steuerventile 16, 17 können hierzu mittels eines Rechners angesteuert werden der Betriebsparameter aus der allgemeinen Maschinensteuerung und-Überwachung verarbeitet.

Die Düsen 5, die hier, wie Figur 3 am besten erkennen läßt, als rücklauflose Strahldüse mit einem die zentrale Düsenbohrung 24 mit einem Ausgangsdurchmesser von 0,5mm aufweisenden Düsenkörper 25 ausgebildet ist, der in einen Düsenstock 26 des Auftragkopfes 6 eingeschraubt ist, und die Steuerventile 16, 17 der jeder Düse 5 zugeordneten Ventilanordnung stellen Verschleißteile dar, deren Lebensdauer begrenzt ist und die von Zeit zu Zeit ersetzt werden müssen. Um dies zu erleichtern, besteht das Gehäuse jedes Auftragkopfes 6, wie Figur 3 weiter erkennen läßt, aus zwei schalenförmigen Hälften 27, 28 die durch Zusammenstecken lösbar aneinander festlegbar sind. Die eine Hälfte 27 ist dabei stationär angeordnet, d.h. auf dem Halter 7 fixiert. Der Versorgungsstrang 10 führt zu der auf dem Halter 7 fixierten Hälfte 27 des Auftragkopfes 6, die mit einer entsprechenden Zugangsbohrung 20 versehen ist, in die das Ende der Umhüllung des Versorgungsstrangs 10 eingeschraubt sein kann. Die Verschleißteile in Form der Düse 5 bzw. der Ventilanordnung mit den Steuerventilen 16, 17 befinden sich auf der anderen Hälfte 29 des Auftragkopfes 6, die auf die stationäre Hälfte 27 aufsteckbar ist. Im Falle eines notwendig werdenden Austausches eines Verschleißteils wird daher einfach die Hälfte 28 abgezogen und durch eine neue ersetzt.

Die beiden Hälften 27, 28 des Auftragkopfes 6 können durch im Bereich einander gegenüberliegender Seiten angeordnete Spannschlösser 30 miteinander verspannt werden. Diese können als Kniehebel ausgebildet sein, die über ihren Totpunkt hinaus verschwenkt werden, so daß sich eine automatische Verriegelung ergibt. Im Bereich der Trennfuge kann eine der beiden Hälften mit einem umlaufenden Kragen 31 versehen sein, der eine hohe Staubdichtheit gewährleistet. Um sicherzustellen, daß die lose Hälfte 28 stets in der richtigen Stellung auf die stationäre Hälfte 27 aufgesteckt wird, können ein oder mehrere, asymmetrisch angeordnete, die Trennfuge überbrükkende Paßstifte 32 vorgesehen sein.

Der in die stationäre Hälfte 27 einlaufende Versorgungsstrang 10 enthält sowohl die Flüssigkeitszuleitungen 14, 15 als auch die Signalzuleitungen 18. Sämtliche Leitungen gehen über die Trennfuge zwischen den beiden Hälften 27, 28 des Auftragkopfes 6 hinweg. Um dennoch eine leichte Abnehmbarkeit der losen Hälfte 28 zu ermöglichen, ist im Bereich der Trennfuge eine durch Steckkupplungen überbrückte Unterbrechung dieser Leitungen vorgesehen. Die den Flüssigkeitszuleitungen 14, 15 zugeordneten Steckkupplungen sind als Flüssigkeitkupplungen ausgebildet, die den Signalzuleitungen 18, zugeordneten Steckkupplungen sind als elektrische Kupplungen ausgebildet. In beiden Fällen bestehen diese Steckkupplungen im dargestellten Ausführungsbeispiel aus auf der einen Hälfte 27 befestigten Buchsen 33 und auf der anderen Hälfte 28 befestigten Steckstiften 34, die beim Aufstecken der losen Hälfte 28 auf die stationäre Hälfte 27 automatisch zum Eingriff in die jeweils zugeordnete Buchse 33 kommen. Die Buchsen 33 und die Steckstifte 34 verlaufen ebenso wie die Paßstifte 32 parallel zur Steckrichtung der aufsteckbaren Hälften 28, d.h. lotrecht zu Trennebene. Die Kupplungselemente in Form der Buchsen 33 bzw. Steckstifte 34 sind an trennfugenparallelen Tragplatten 35 bzw. 36 befestigt, die deckelartig in die jeweils zugeordnete, wannenförmige Hälfte 27 bzw. 28 des Auftragkopfes 6 eingesetzt sind. Im dargestellten Ausführungsbeispiel liegen die Tragplatten 35 bzw. 36 an in den Innenraum der jeweils zugehörigen Hälfte 27 bzw. 28 des Auftragkopfes 6 an und sind hiermit verschraubt.

Die Steckstifte 34 der Flüssigkeitskupplungen sind im dargestellten Ausführungsbeispiel als Hohlstifte ausgebildet, die mit Spiel in die jeweils zugeordnete Buchse 33 eingreifen. Der radiale Abstand wird dabei durch einen O-Ring 37 überbrückt. Den auf der stationären Hälfte 27 aufgenommenen Buchsen 33 der Flüssigkeitskupplungen ist jeweils ein Rückschlagventil 38 vorgeordnet, dessen Schließelement durch den in die betreffende Buchse 33 eingreifenden Steckstift 34 in Öffnungsstellung gehalten wird. Hierzu sind die Steckstifte 34 der Flüssigkeitskupplungen mit einem in der Eingriffsstellung in das vorgeordnete Rückschlagventil 38 eingreifenden Stößel 39 versehen. Um die Befestigung der Stößel 39 zu erleichtern, sind die betreffenden Hohlstifte mit einer radialen Eingangsbohrung versehen. Die Stößel 39 stellen sicher, daß beim Abziehen der losen Hälfte 28 die Flüssigkeitszuleitungen 14 bzw. 15 automatisch verschlossen werden, so daß keine Flüssigkeit verschüttet werden kann.

Die Buchsen 33 der Flüssigkeitskupplungen sind als in zugeordnete Durchgangsbohrungen der Tragplatte 35 eingeschraubte Nippel ausgebildet, an die das jeweils vorgeordnete Rückschlagventil 38 angesetzt ist. Die Steckstifte 34 der Flüssigkeitskupplungen sind ebenfalls mit Gewindenippeln versehen, die hier in eine jeweils zugeordnete Sackbohrung der Tragplatte 36 eingeschraubt sind. Von den genannten Sackbohrungen geht jeweils eine Stichbohrung ab, in die ein Anschlußnippel 40 eingeschraubt ist, der über einen vorderen Abschnitt der Flüssigkeitszuleitung 14 bzw. 15 mit dem Steuerventil 16 verbunden ist, wie in Figur 2 mit strichpunktierten Linien angedeutet ist.

Die Buchsen 33 der den Signalleitungen 18 zugeordneten elektrischen Kupplungen sind in einen aus Isolierwerkstoff bestehenden Träger 41 eingesetzt und mit den zugeordneten Signalleitungen verdrahtet, wie durch die Klemmen 42 angedeutet ist. Dasselbe gilt für die Steckstifte 34 der lektrischen Kupplungen. Die elektrischen Kupplungen sind zentral zwischen den Flüssigkeitskupplungen angeordnet, so daß die sämtlichen Signalleitungen 18 jeweils zugeordneten Buchsen 33 bzw. Steckstifte 34 auf jeweils einem gemeinsamen, isolierenden Träger 41 aufgenommen sein können. Die mit den Steckstiften der elektrischen Kupplungen verdrahteten Steuerventile 16 bzw. 17 können im Bereich zwischen den Anschlußnippeln 40 an der Rückseite der zugeordneten Tragplatte 36 befestigt sein.

## Patentansprüche

1. Verfahren zum Verbinden von mindestens zwei Materialbahnen mittels wenigstens eines auf wenigstens eine der Bahnen aufzutragenden, durchgehenden oder unterbrochenen Streifens (4) aus dünnflüssigem Leim, der mittels einer Düse (5) auf die jeweils zugeordnete Materialbahn berührungslos aufgespritzt und vorher gefiltert wird, **dadurch gekennzeichnet, daß** der verwendete Leim eine wasserähnliche Viskosität besitzt, die mit der Viskosität von Wasser ein Verhältnis von höchstens 1,5 bis 2 ergibt, daß bei der Filterung des Leims ein Weitenverhältnis von Maschenweite zu Düsenweite von etwa 1:4 verwendet wird und daß der Leim mit Niederdruck von etwa 1,5 bar beaufschlagt wird.

2. Verfahren nach Anspruch 1, **dadurch gekennzeichnet, daß** die Viskosität des Leims zur Viskosität von Wasser ein Verhältnis von 17:10 ergibt.

3. Verfahren nach einem der vorhergehenden Ansprüche, **dadurch gekennzeichnet, daß** der Leim ein Dispersionsleim mit einem Festkörperanteil von 40 bis 70%, vorzugsweise 50 bis 60%, einer Oberflächenspannung von mindestens 25 mN/m² , vorzugsweise 30 mN/m² und einer im DIN 4mm-Becher gemessenen Viskosität von 15sec bis 20sec ist.

4. Verfahren nach einem der vorhergehenden Ansprüche, **dadurch gekennzeichnet, daß** der Leim mittels einer eine Düsenweite von etwa 0,5mm aufweisenden Düse auf die zugeordnete Materialbahn aufgespritzt wird.

5. Verfahren nach einem der vorhergehenden Ansprüche, **dadurch gekennzeichnet, daß** bei der Filterung des Leims eine Maschenweite von etwa 125µ zur Anwendung kommt.

6. Verfahren nach einem der vorhergehenden Ansprüche zum Verbinden von wenigstens zwei mittels einer Druckmaschine bedruckten Papierbahnen, **dadurch gekennzeichnet, daß** beim Abschalten der Druckmaschine vor Erreichen des Stillstands der Papierbahnen die Leimauftragseinrichtung zumindest ab einer jeder Düse (5) vorgeordneten Ventilanordnung (16, 17) mit Falzhilfeflüssigkeit, vorzugsweise in Form von erwärmtem Wasser, gespült wird, wobei die Leimzuleitung (14) abgesteuert und eine Falzhilfeflüssigkeitszuleitung (15) aufgesteuert werden.

## Claims

1. A method of joining together at least two webs of material by means of at least one continuous or discontinuous strip (4), to be applied to at least one of the webs, of low-viscosity adhesive, which is sprayed by means of a nozzle (5) onto the respectively associated web of material and is previously filtered, characterized in that the adhesive employed possesses a water-like viscosity which in relation to the viscosity of water bears a ratio of at the most 1.5 to 2, in that on filtering the adhesive a mesh ratio of mesh width to nozzle width of approximately 1:4 is utilized and in that the adhesive is acted upon with a low pressure of approximately 1.5 bar.

2. The method as claimed in claim 1, characterized in that the ratio between the viscosity of the adhesive and that of water is equal to 17:10.

3. The method as claimed in either of the preceding claims, characterized in that the adhesive is a dispersion adhesive with a solids content of 40 to 70 % and preferably 50 to 60 %, a surface tension of at least 25 mN/m² and preferably 30 mN/m² and a viscosity as measured using a 4 mm DIN beaker of 15 sec to 20 sec.

4. The method as claimed in any one of the preceding claims, characterized in that the adhesive is sprayed using a nozzle having a width of approximately 0.5 mm onto the respective material web.

5. The method as claimed in any one of the preceding claims, characterized in that during filtration of the adhesive a mesh width of approximately 125 µ is utilized.

6. The method as claimed in any one of the preceding claims for the joining of at least two paper webs printed by means of a printing machine, characterized in that on switching off the printing machine prior to attaining the stationary state of the paper webs the adhesive application device is flushed with a folding adjuvant liquid, preferably in the form of warm water at least from a valve arrangement (16 and 17) arranged upstream from each nozzle (5), the adhesive supply duct (14) being shut and a folding adjuvant liquid duct (15) being opened.

## Revendications

1. Procédé de jonction d'au moins deux nappes de matière à l'aide d'au moins une bande (4) continue ou interrompue de colle très fluide à appliquer au moins sur l'une des nappes, cette colle étant pulvérisée à l'aide d'une buse (5) sans contact sur la nappe de matière qui lui est respectivement affectée et étant filtrée préalablement, caractérisé en ce que la colle utilisée possède une viscosité analogue à celle de l'eau qui a un rapport avec la viscosité de l'eau au maximum de 1,5 à 2, on utilise lors de la filtration de la colle un rapport de la largeur des mailles avec la largeur de la buse d'environ 1:4 et la colle est acheminée sous basse pression d'environ 1,5 bar.

2. Procédé selon la revendication 1, caractérisé en ce que la viscosité de la colle est dans un rapport de 17:10 avec la viscosité de l'eau.

3. Procédé selon l'une quelconque des revendications précédentes, caractérisé en ce que la colle est une dispersion de colle avec une fraction de corps solides de 40 à 70 %, de préférence de 50 à 60 %, une tension superficielle d'au moins 25 mN/m², de préférence 30 mN/m², et une viscosité de 15 à 20 sec. mesurée dans un bécher de 4 mm DIN.

4. Procédé selon l'une quelconque des revendications précédentes, caractérisé en ce que la colle est pulvérisée à l'aide d'une buse présentant une largeur d'environ 0,5 mm sur la nappe de matière qui lui est affectée.

5. Procédé selon l'une quelconque des revendications précédentes, caractérisé en ce que l'on utilise une largeur de mailles d'environ 125 microns pour la filtration de la colle.

6. Procédé selon l'une quelconque des revendications précédentes pour joindre au moins deux nappes de papier imprimées par une machine d'impression, caractérisé en ce que, lorsque l'on déconnecte la machine d'impression, avant que les nappes de papier ne s'immobilisent, le dispositif d'application de colle est rincé au moins à partir d'un système de vannes (16, 17) agencé en amont de chaque buse (5) à l'aide d'un liquide auxiliaire de pliage, de préférence sous la forme d'eau chaude, la conduite d'acheminement de colle (14) étant déconnectée et une conduite d'acheminement de liquide auxiliaire de pliage (15) étant commandée.
